# EUROPÄISCHE PATENTSCHRIFT

(11) **EP 3 231 572 B1**
(45) Veröffentlichungstag und Bekanntmachung des Hinweises auf die Patenterteilung: **02.03.2022**
(21) Anmeldenummer: 17000476.6
(22) Anmeldetag: 23.03.2017
(51) Int. Cl.: B29C 44/04, B29C 44/58, B29K 75/00, B29L 31/30, B29C 33/00

(54) **WERKZEUG UND VERFAHREN ZUR HERSTELLUNG EINES SCHAUMKÖRPERS, SOWIE SCHAUMSTOFFKÖRPER**
TOOL AND METHOD FOR MANUFACTURING A FOAM ARTICLE, AND FOAM ARTICLE
OUTIL ET PROCÉDÉ DE FABRICATION D'UN CORPS EN MOUSSE ET CORPS EN MOUSSE

(30) Priorität: 14.04.2016 DE 102016004407
(43) Veröffentlichungstag der Anmeldung: 18.10.2017
(73) Patentinhaber: GRAMMER AG, 92289 Ursensollen (DE)
(72) Erfinder: Hammerl, Detlef, 92224 Amberg (DE); Kraus, Peter, 92253 Schnaittenbach (DE); Kurz, Helmut, 92237 Sulzbach-Rosenberg (DE)
(74) Vertreter: Roche, von Westernhagen & Ehresmann

(56) Entgegenhaltungen:
- DE-A1- 3 520 582
- JP-A- H03 219 925
- JP-A- 2002 096 341
- JP-A- 2002 120 237
- KR-A- 20150 080 685
- US-A- 3 840 627
- US-A- 4 714 575
- US-A- 4 923 378
- US-A1- 2004 007 793
- US-A1- 2015 093 546

## Beschreibung

Werkzeug und Verfahren zur Herstellung eines Schaumkörpers.

Die Erfindung betrifft zunächst ein Werkzeug zur Herstellung eines Schaumkörpers.

Ein solcher Schaumkörper wird z.B. als Polster für die Kopfstütze eines Fahrzeugsitzes verwendet. Die Kopfstütze umfasst einen Kopfkasten mit einer Kopfanlagefläche, die an dem Kopfkasten unmittelbar oder mittelbar angeordnet ist. Der Kopfkasten ist z.B. mittels wenigstens einer Tragstange an dem Sitz gelagert. Der Kopfkasten ist mit dem Polster versehen, welches üblicherweise von einem Schaumkörper gebildet ist.

Im Stand der Technik wurden bereits unterschiedliche Schäume kombiniert, z.B. damit das Polster der Kopfstütze z.B. einen harten Kern, aber einen weichen Mantel aufweist.

Aus DE 101 36 523 B4 ist eine Kopfstütze bekannt, deren Kopfkasten ein Polster aufweist, das ein Element aus einem Weichschaumstoff aus Polyurethan und ein Einlegeteil aus einem Hartschaumstoff aus Polyurethan umfasst.

In der US 7,926,871 B2 ist eine Kopfstütze beschrieben, die in vertikal übereinander liegenden Bereichen Schäume mit unterschiedlichen dynamischen Charakteristiken aufweist.

Die DE 101 23 704 A1 beschreibt eine Vorrichtung zur Herstellung eines mehrlagigen Schaumstoff-Polsterkörpers für Kraftfahrzeug-Polsterteile. Ein Formkern wird in ein Gegenformelement eingeführt und mit einem ersten Schaum umspritzt. Danach wird der Formkern in einem Zusatzgegenformelement angeordnet und mit einem zweiten Schaum
umspritzt. Der zweite Schaum hat eine andere Charakteristik als der erste Schaum.

JP H03 - 219925 A betrifft eine Form mit einem Formhohlraum. An der Form ist ein flexibler Einleger derart befestigbar, dass er den Formhohlraum in einen ersten Teilbereich und einen zweiten Teilbereich trennt. Durch zwei unterschiedliche Einfüllöffnungen kann jeder Teilbereich mit einem separaten Material gefüllt werden. Der Einleger verbleibt in dem Bauteil.

US 4,714,575 betrifft ein Reaction Injection Moulding Verfahren (RIM). Dabei wird in dem Formhohlraum ein Einleger platziert, welcher verformbar ist, jedoch steif genug ist, um unter der Last seines Eigengewichtes formstabil zu bleiben. Der Einleger separiert den Formhohlraum in zwei Abteilungen. Durch zwei separate Einlassöffnungen können die Abteilungen separat befüllt werden. Der Einleger verbleibt in dem hergestellten Bauteil.

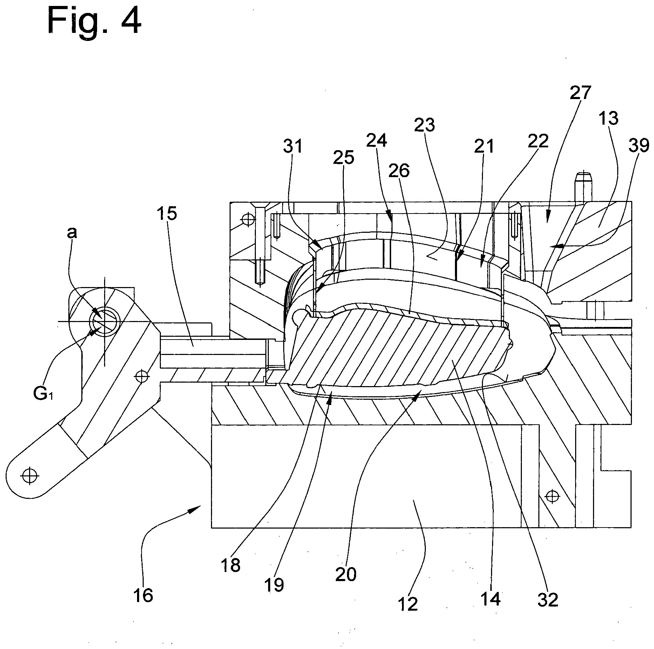

JP 2002 096341 A betrifft eine Form zur Herstellung einer Kopfstütze. Ein Tragstangenbügel sowie ein Einleger werden in die Form eingelegt. Der Einleger teilt den Formhohlraum in zwei Bereiche, die anschließend separat befüllt werden. Der Einleger verbleibt gemäß Fig. 4 in dem hergestellten Bauteil.

JP 2002120237 A beschreibt eine Vorrichtung zur Herstellung einer Kopfstütze. In eine Form werden der Kopfstützenbezug mit einer daran befestigten flexiblen Trennwand, sowie ein Tragstangenbügel eingelegt. Die Trennwand teilt den Formhohlraum in zwei Raumbereiche. Auf beiden Seiten der Trennwand werden separat Füllmaterialien eingespritzt, wobei sich die Trennwand verformt. Die Trennwand ist anschließend Bestandteil des hergestellten Produktes.

US 3,840,627 beschreibt eine Vorrichtung zur Herstellung eines Schaumteils. Die Vorrichtung umfasst ein Unterteil sowie ein Deckelteil. An dem Deckelteil wird ein Einleger befestigt, welcher den Formhohlraum der Vorrichtung in zwei Abteilungen teilt. Durch Einfüllöffnungen kann separat Füllmaterial in die jeweilige Abteilung eingefüllt werden. Der Einleger verbleibt als integraler Bestandteil in dem produzierten Schaumteil.

US 2015/0093546 A1 betrifft eine Form zur Herstellung eines Sitzschaumteils. Die Form umfasst zwei Formhälften, wobei drei Bereiche des Formhohlraums durch Trennwände unterteilt sind, die an der unteren Formhälfte befestigt sind. Nach dem Öffnen der Form und der Entnahme des Schaumteils, findet ein Lösen des Schaumteils von der Trennwand statt. Die in den unterschiedlichen Bereichen produzierten Schaumteile sind danach formschlüssig miteinander verbunden.

DE 3520582 A1 betrifft eine Vorrichtung zum Entnehmen von hinterschnittenen Weichschaumteilen.

US 4,923,378 betrifft eine Form zum Formen von Kunststoffteilen.

US 2004/ 0007793 betrifft eine Vorrichtung zum Schäumen in einer Form sowie die gefertigten Schaumteile. Die Vorrichtung umfasst einen Formhohlraum mit zwei Formhälften. Gemäß Absatz 169 sind bewegbare Partitionierwände 32 vorgesehen. Zur Verbindung der Materialien der separaten Formhohlräume werden die bewegbaren Partitionierwände aus dem Formhohlraum zurückgezogen und die Verbindung erfolgt mit heißem Dampf.

KR 20150080685A offenbart eine Vorrichtung zur Herstellung eines Sitzpolsters, wobei Bereiche des Formhohlraums von einer Wand 111 getrennt sind. Zur vollständigen Abtrennung der Formhohlräume wird ein Kern 300 in Form von Stangen, welche ein Vlies aufspannen, so zu der Wand angeordnet, dass zwei separate Formhohlräume entstehen. Das Vlies verbleibt in dem hergestellten Sitzpolster, während das Polster von dem Aufspannkern 300 entfernt wird, welcher an der Form befestigt ist.

Es war Aufgabe der Erfindung eine Vorrichtung zu schaffen, welche die Herstellung eines unterschiedliche Schäume aufweisenden Schaumkörpers in Bezug auf den Zeitaufwand für die Herstellung verbessert.

Die Aufgabe wurde gelöst durch eine Vorrichtung mit den Merkmalen des Anspruchs 1.

Die Vorrichtung umfasst eine wenigstens zwei Formteile umfassende Form. Die Formteile können zwischen einer geöffneten und einer geschlossenen Position bewegt werden. Die Form weist eine erste Angussöffnung auf, die zu der ersten Formhöhlung führt und mindestens eine zweite Angussöffnung, die zu wenigstens einer separaten zweiten Formhöhlung führt. Ein Schaum kann über die jeweilige Angussöffnung dem ersten oder dem zweiten Formhohlraum zugeleitet werden. Z.B. verbindet ein Kanal die Angussöffnung mit der Formhöhlung. D.h. die Form umfasst wenigstens zwei separate Formhöhlungen, die jeweils eine separate Angussöffnung aufweisen. Die erste Formhöhlung und die zweite Formhöhlung sind in der geschlossenen Position der Form durch eine Wand voneinander getrennt.

Ein Vorteil der erfindungsgemäßen Vorrichtung besteht darin, dass in den ersten Formhohlraum ein erster Schaum und in den zweiten Formhohlraum ein zweiter Schaum gleichzeitig oder kurz nacheinander einfüllbar und aushärtbar sind. Der erste Schaum und der zweite Schaum haben z.B. eine unterschiedliche Charakteristik. Z.B. weist der erste Schaum eine größere Härte auf, als der zweite Schaum. Auf diese Weise kann die Herstellungszeit von Schaumkörpern wesentlich reduziert werden, was zu einer Ersparnis in den Herstellungskosten führt. Die in dem ersten Formhohlraum und in dem zweiten Formhohlraum geformten Formteile sind z.B. Teile eines Endproduktes.

Mit der Vorrichtung ist z.B. ein Schaumkörper zur Polsterung des Kopfkastens einer Kopfstütze herstellbar, welcher den Kopfkasten einer Kopfstütze für einen Fahrzeugsitz bildet, wobei der Schaumkörper in einem ersten Bereich einen Schaum mit einer ersten Charakteristik und in wenigstens einem zweiten Bereich einen Schaum mit einer zweiten Charakteristik aufweist. Z.B. kann der Kopfkasten in einem Kopfanlagebereich mit einem weichen Schaum und in den übrigen Bereichen mit einem harten Schaum versehen sein.

Die Form umfasst z.B. einen Formkern, welcher in der Form angeordnet werden kann. Der Formkern bildet wenigstens einen Wandbereich mindestens einer Formhöhlung aus. Der Formkern kann z.B. eine taschenartige Aussparung in einem Schaumkörper ausbilden. Z.B. bildet der Formkern eine Aussparung in einem Schaumkörper eines Kopfteils einer Kopfstütze für einen Sitz aus. Die Aussparung kann z.B. dafür vorgesehen sein, ein mit wenigstens einer Tragstange verbundenes Basisteil der Kopfstütze darin anzuordnen.

Gemäß einer besonderen Ausgestaltung der Erfindung trennt der Formkern die erste Formhöhlung von der zweiten Formhöhlung. Der Formkern bildet in diesem Fall wenigstens eine Fläche der ersten Formhöhlung und wenigstens eine Fläche der zumindest zweiten Formhöhlung aus. Auf diese Weise kann erfindungsgemäß z.B. der Schaumkörper eine Aussparung für das Basisteil einer Kopfstütze umfassen, wobei der Schaumkörper derart ausgebildet ist, dass an die Aussparung wenigstens zwei unterschiedliche Schäume mit unterschiedlichen Charakteristiken angrenzen.

Gemäß einer Ausführungsform ist der Formkern bewegbar an der Form gelagert und zwischen einer Entformposition und einer Arbeitsposition bewegbar. In der Entformposition kann das hergestellte Formteil der Form entnommen werden und in der Arbeitsposition ist das Einfüllen des Schaums in die Formöffnungen möglich. Z.B. ist der Formkern zwischen der Entformposition und der Arbeitsposition schwenkbar an der Form gelagert.

Zwischen zwei Formhöhlungen ist z.B. wenigstens eine Öffnung ausgebildet.

Gemäß der Erfindung wird wenigstens ein Verbindungselement derart in der Öffnung angeordnet, dass es zum Verbinden der in den Formhöhlungen zu fertigenden Schaumteilen in die erste Formhöhlung ragt und in die zweite Formhöhlung ragt. Das Verbindungselement ist z.B. von einem Material gebildet, an welches das in der ersten Formhöhlung und das in der zweiten Formhöhlung hergestellte Formteil anformbar ist. D.h. nach dem Formprozess sind das Verbindungselement sowie das in der ersten Formhöhlung produzierte Schaumteil und das in der zweiten Formhöhlung produzierte Schaumteil stoffschlüssig und / oder formschlüssig verbunden.

Die Öffnung kann z.B. zwischen dem Formkern und der Form ausgebildet sein.

Gemäß einem zweiten Aspekt betrifft die Erfindung ein Verfahren zur Herstellung eines Schaumkörpers.

Das Verfahren wird z.B. angewendet, um Polster von Fahrzeugkopfstützen herzustellen. Solche Kopfstützen sind üblicherweise mit Schaumkörpern gepolstert.

Die oben erwähnte DE 101 23 704 A1 beschreibt z.B. ein solches Verfahren aus dem Stand der Technik.

Es war Aufgabe der Erfindung ein Verfahren zu schaffen, mit welchem bei geringem Zeitaufwand Schaumkörper mit unterschiedlichen Schäumen herstellbar sind.

Die Erfindung wird gelöst durch ein Verfahren mit den Merkmalen des Anspruchs 6.

Bei dem erfindungsgemäßen Verfahren zur Herstellung eines Schaumstoffkörpers wird ein Verbindungselement in eine zwei Formhöhlungen einer Form verbindende Öffnung eingelegt. Dabei ragt das Verbindungselement in die erste Formhöhlung und in die zweite Formhöhlung. Gleichzeitig oder kurz nacheinander wird durch einen ersten Angusskanal ein erster Schaum in die erste Formhöhlung und durch einen zweiten Angusskanal ein zweiter Schaum in die zweite Formhöhlung gefüllt. Anschließend werden die Schäume in der ersten Formhöhlung und in der zweiten Formhöhlung ausgehärtet. Dir in der ersten Formhöhlung und in der zweiten Formhöhlung befindlichen Schäume verbinden sich stoffschlüssig und / oder formschlüssig mit dem Verbindungselement. Nach dem Aushärten wird der unterschiedliche Schäume aufweisende Schaumkörper aus der Form entnommen.

Bezüglich der Vorteile des Verfahrens wird - um Wiederholungen zu vermeiden - auf die Ausführungen zu dem ersten Aspekt der Erfindung verwiesen.

Gemäß einer Ausgestaltung der Erfindung wird nach dem Einlegen des Verbindungselements in die Form ein Formkern derart in der Form angeordnet, dass er eine erste Formhöhlung von einer zweiten Formhöhlung trennt. Auch in Bezug auf die Vorteile und Ausführungen dieses Merkmals wird auf den ersten Aspekt der Erfindung verwiesen.

Schließlich wird auch einen Schaumkörper offenbart.

Der Schaumkörper umfasst wenigstens einen ersten Schaum und einen zweiten Schaum, wobei der zweite Schaum sich bezüglich wenigstens einer Eigenschaft von dem ersten Schaum unterscheidet. der Schaumkörper umfasst z.B. mindestens einen Hartschaumbereich und mindestens einen Weichschaumbereich. Der erste Schaum und der zweite Schaum sind durch eine Verbindung miteinander verbunden.

Die Verbindung kann z.B. von einem Stoffschluss zwischen dem ersten Schaum und dem zweiten Schaum gebildet sein.

Gemäß der Erfindung ist die Verbindung von einem Verbindungselement gebildet. Das Verbindungselement ist mit dem ersten Schaum und mit dem zweiten Schaum verbunden. Die Verbindung kann z.B. durch Stoffschluss und / oder durch Formschluss erfolgen. Das Verbindungselement kann z.B. als Verbindungsmatte ausgebildet sein. In diesem Fall bietet es eine relativ große Fläche zum verbinden mit dem jeweiligen Schaum.

Weitere Vorteile und Merkmale der Erfindung ergeben sich anhand eines schematisch in den Fig. dargestellten Ausführungsbeispiels. Es zeigen:
Fig. 1 eine Schnittdarstellung der erfindungsgemäßen Vorrichtung, wobei die Formteile einer Form der Vorrichtung geöffnet sind und ein Formkern in einer Entnahmeposition angeordnet ist,
Fig. 2 eine Darstellung in Anlehnung an Fig. 1, wobei eine Verbindungsmatte auf dem Formkern der Form angeordnet ist,
Fig. 3 eine Darstellung in Anlehnung an Fig. 2, wobei der Formkern in einer Arbeitsposition angeordnet ist,
Fig. 4 eine Darstellung der Form in Anlehnung an Fig. 3, wobei sich ein erstes Formteil und ein zweites Formteil in einer Vor-Schließposition befinden,
Fig. 5 eine Darstellung in Anlehnung an Fig. 4, wobei sich das erste Formteil und das zweite Formteil in einer Schließposition befinden, und wobei in eine erste Formhöhlung ein erster Schaum und in eine zweite Formhöhlung ein zweiter Schaum eingefüllt werden,
Fig. 6 eine Darstellung in Anlehnung an Fig. 5, wobei die Angussöffnungen zum Aushärten des Schaumkörpers von einem dritten Formteil abgedeckt sind,
Fig. 7 in Anlehnung an Fig. 3 einer Darstellung der geöffneten Form mit dem ausgehärteten Schaumkörper,
Fig. 8 in Anlehnung an Fig. 1 eine Darstellung des Formkerns mit dem Schaumkörper in der Entnahmeposition,
Fig. 9 der Schaumkörper nach dem Entformen von dem Formkern und dem montieren auf einem Basiskörper einer Kopfstütze.

Eine Vorrichtung zur Herstellung eines Schaumkörpers wird insgesamt mit dem Bezugszeichen 10 bezeichnet. Gleiche Bezugszeichen in den unterschiedlichen Fig. bezeichnen entsprechende Teile, auch wenn kleine Buchstaben nachgestellt oder weggelassen sind.

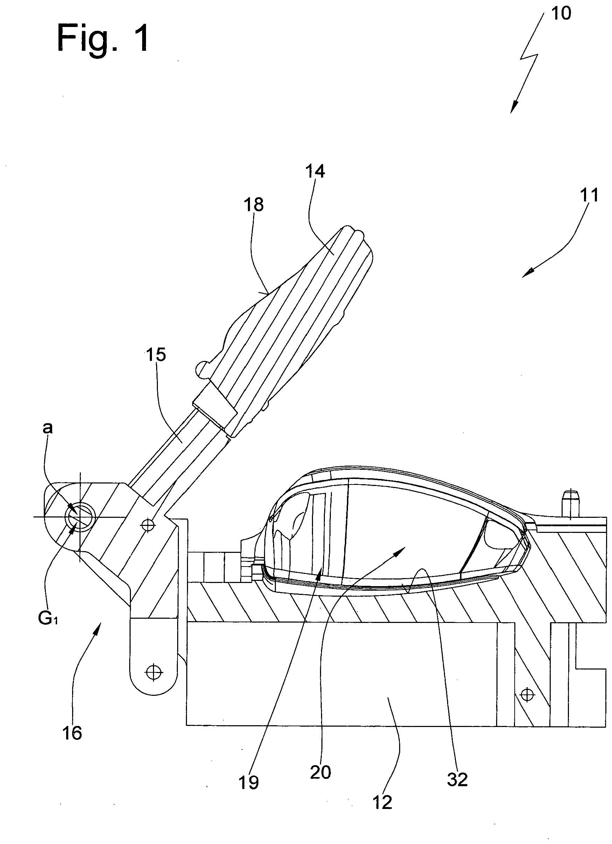

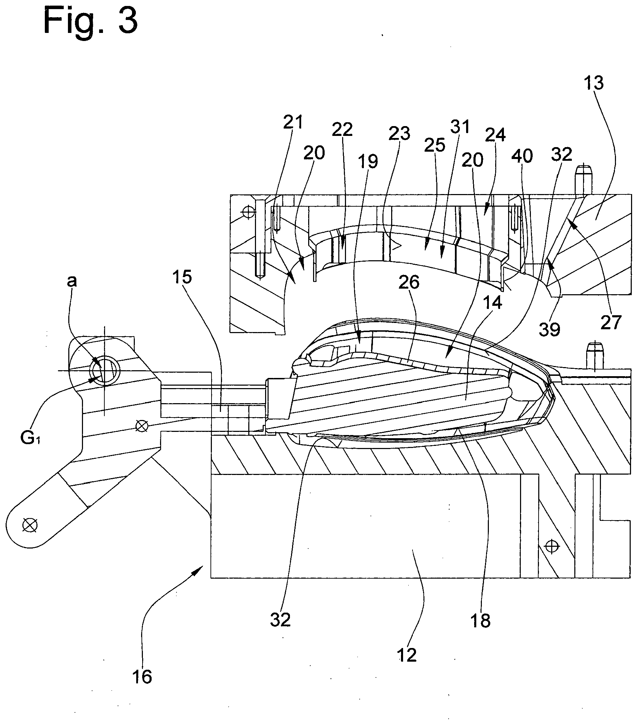

Die Vorrichtung 10 umfasst eine Form 11, die in Fig. 1 dargestellt ist. Die Form 11 umfasst Formteile 12, 13 und 30 sowie einen Formkern 14. Die Formteile 13 und 30 sind in Fig. 1 aus Gründen der Übersicht nicht dargestellt. Der Formkern 14 ist mit einem Arm 15 um eine Schwenkachse a schwenkbar an dem Formteil 12 gehalten. Der Arm 15 bildet mit einem Endbereich 16 des Formteils 12 ein Schwenkgelenk G1. Der Formkern 14 kann auf diese Weise zwischen einer in Fig. 1 dargestellten Entnahmeposition und einer z.B. in Fig. 3 dargestellten Arbeitsposition geschwenkt werden.

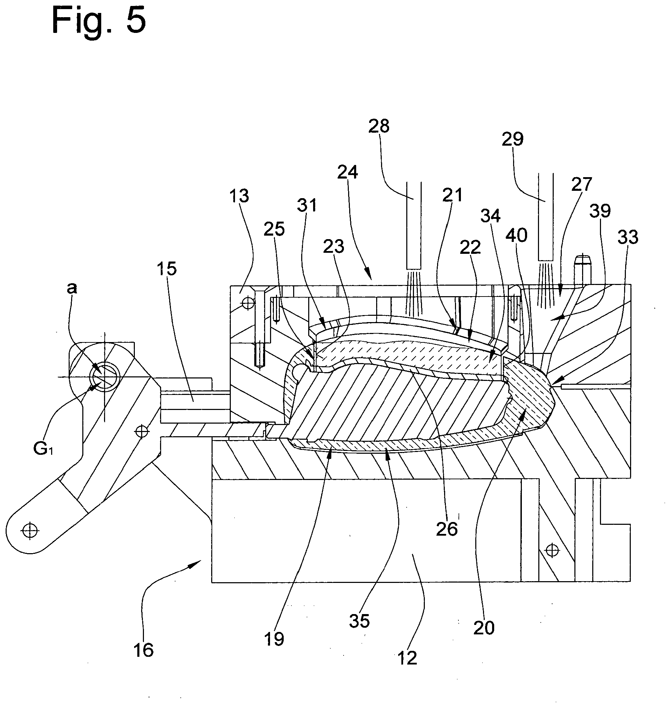

Das in Fig. 3 dargestellte Formteil 13 kann relativ zu dem Formteil 12 zwischen einer geöffneten Position und einer geschlossenen Position bewegt werden. Gemäß Fig. 1 befindet sich das Formteil 13 in der geöffneten Position und der Formkern 14 ist in der Entnahmeposition angeordnet. In Fig. 4 ist das Formteil 13 in einer Vor-Schließposition gezeigt. Gemäß Fig. 5 ist das Formteil 13 in der geschlossenen Position dargestellt.

Das Formteil 12 ist mit einer Aussparung 19 versehen, die einen Teil einer ersten Formhöhlung 20 ausbildet. Ein anderer Teil der Formhöhlung 20 ist von einer Aussparung 21 in dem Formteil 13 ausgebildet. Mit anderen Worten bilden die Aussparungen 19 und 21 gemeinsam die Formhöhlung 20. Innenflächen der Formteile 12 und 13 begrenzen zusammen mit einer Außenfläche 18 des Formkerns 14 die erste Formhöhlung 20.

Die erste Formhöhlung 20 ist von einer an die Aussparung 19 angrenzenden Innenfläche 32 des Formteils 12, von einer Außenfläche 18 des Formkerns 14 sowie von einer Außenfläche 40 eines Stegs 25 begrenzt. Die erste Formhöhlung 20 ist dafür vorgesehen, einen hinteren Bereich sowie Seitenbereiche eines Schaumkörpers einer Kopfstütze auszubilden. Es ist vorgesehen, die erste Formhöhlung 20 mit einem Schaum zu befüllen, der nach dem Aushärten ein relativ hartes Polster bildet.

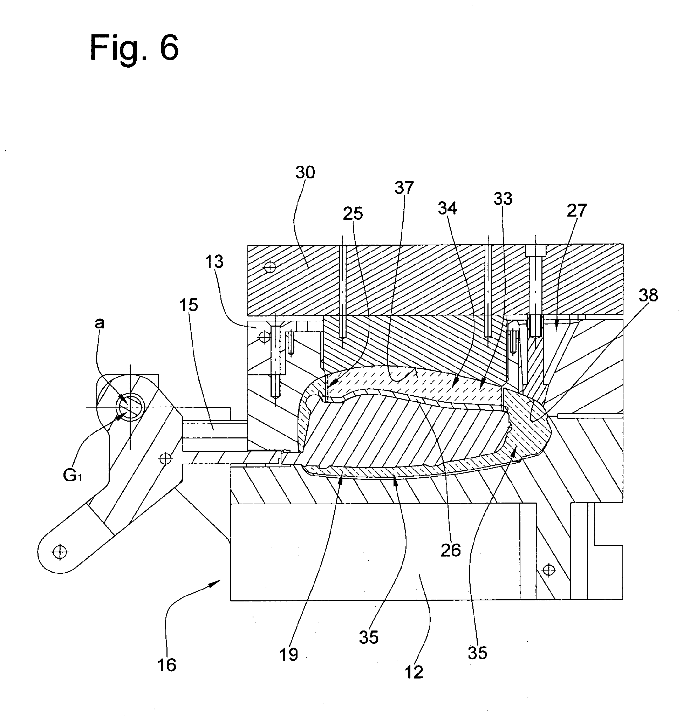

Eine Aussparung 31 in dem Formteil 13 bildet einen Teil der zweiten Formhöhlung 22. Die zweite Formhöhlung 22 wird in der geschlossenen Position der Formteile 12 und 13 von einer Innenfläche 23 des Steges 25, von der Außenfläche 18 des Formkerns 14 sowie von Formflächen 37 und 38 des dritten Formteils 36 (siehe Fig. 6) begrenzt. Die Aussparung 31 ist als Durchgangsöffnung in dem Formteil 13 ausgebildet, so dass die zweite Formhöhlung 22 über eine Öffnung 24 befüllbar ist, die eine Angussöffnung darstellt. Die zweite Formhöhlung 22 ist zur Formung eines Kopfanlagebereichs des Schaumkörpers einer Kopfstütze vorgesehen. Dafür ist vorgesehen, die zweite Formhöhlung mit einem Schaum zu befüllen, der nach dem Aushärten ein relativ weiches Polster bildet.

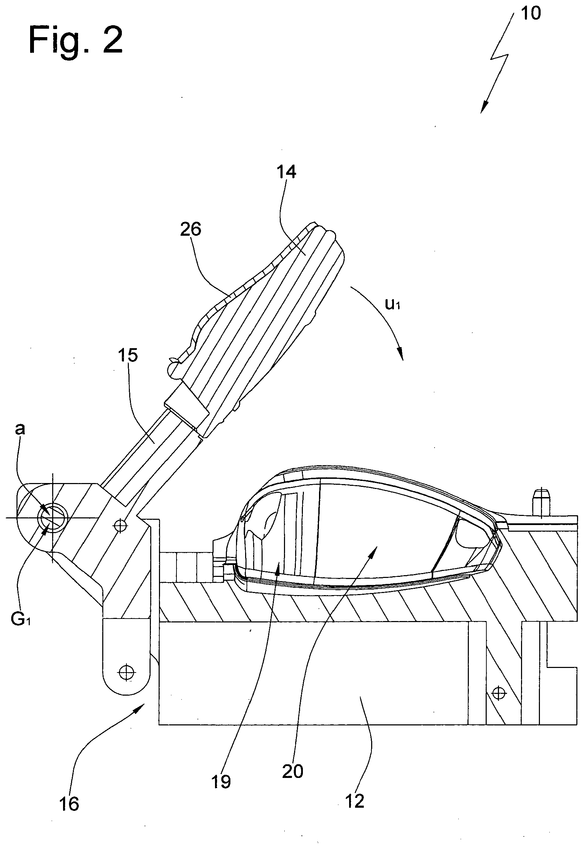

Nachfolgend soll das Verfahren zur Herstellung des Schaumkörpers beschrieben werden. In der Position der Vorrichtung gemäß Fig. 1 werden der Formkern 14 sowie die Formhöhlungen 20 und 22 mit einem Trennmittel benetzt. Anschließend wird eine Verbindungsmatte 26 aus Polyurethan (PUR) in der Form 11, z.B. auf dem Formkern 14, derart angeordnet (siehe Fig. 2), dass die Verbindungsmatte 26 nach dem Bewegen des Formkerns 14 in die Arbeitsposition in beide Formhöhlungen 20 und 22 hineinragt. Das ist der Fall, wenn die Verbindungsmatte 26 so groß ist, dass sie im geschlossenen Zustand der Formteile 12 und 13 über beide gegenüberliegende Flächen 23 und 40 des Steges 25 hinausragt.

In einem nächsten Verfahrensschritt, wird der Formkern 14 in Richtung u1 in die Arbeitsposition bewegt. In Fig. 3 ist der Formkern 14 in der Arbeitsposition gezeigt.

Wenn sich der Formkern 14 in der Arbeitsposition befindet, wird zunächst das zweite Formteil 13 in die Vor-Schließposition gemäß Fig. 4 und anschließend in die geschlossene Position gemäß Fig. 5 bewegt. Danach wird durch eine in dem Formteil 13 ausgebildete erste Angussöffnung 27 (siehe Fig. 5) mittels einer ersten Schaumzuleitung 29 ein erster Schaum in die erste Formhöhlung 20 und durch die Öffnung 24 mittels einer zweiten Schaumzuleitung 28 ein zweiter Schaum in die zweite Formhöhlung 22 eingespritzt. In dem Formteil 13 ist ein Kanal 39 ausgebildet, der von der Angussöffnung 27 zu der zweiten Formhöhlung 22 führt, so dass die zweite Formhöhlung 22 durch die Angussöffnung 27 mit Schaum befüllbar ist.

Nachdem beide Formhöhlungen 20 und 22 gefüllt wurden, wird die Form 11 mit einem deckelartigen dritten Formteil 30 verschlossen (siehe Fig. 6). Das dritte Formteil 30 umfasst die Formfläche 37 welche die zweite Formhöhlung 22 bezüglich der Öffnung 24 begrenzt. Ferner umfasst das dritte Formteil die Formfläche 38, welche die erste Formhöhlung 20 bezüglich der Öffnung 27 begrenzt. Die Form 11 verbleibt in dieser Position, bis der Schaum in den Formhöhlungen 20 und 22 ausgehärtet ist.

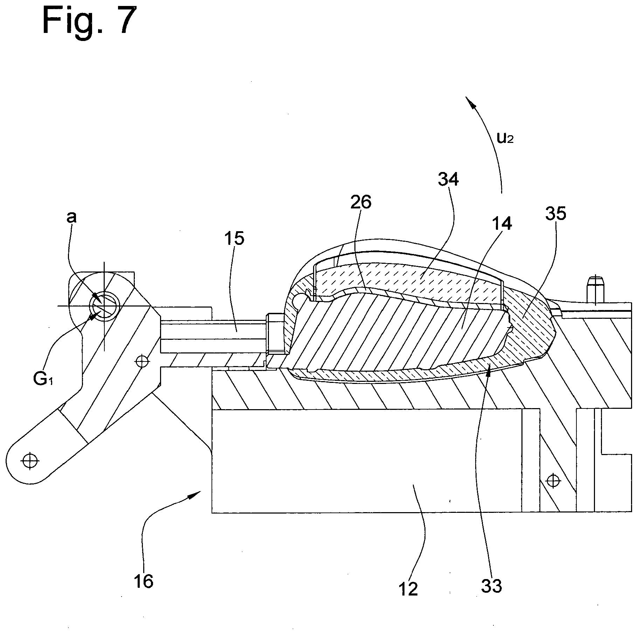

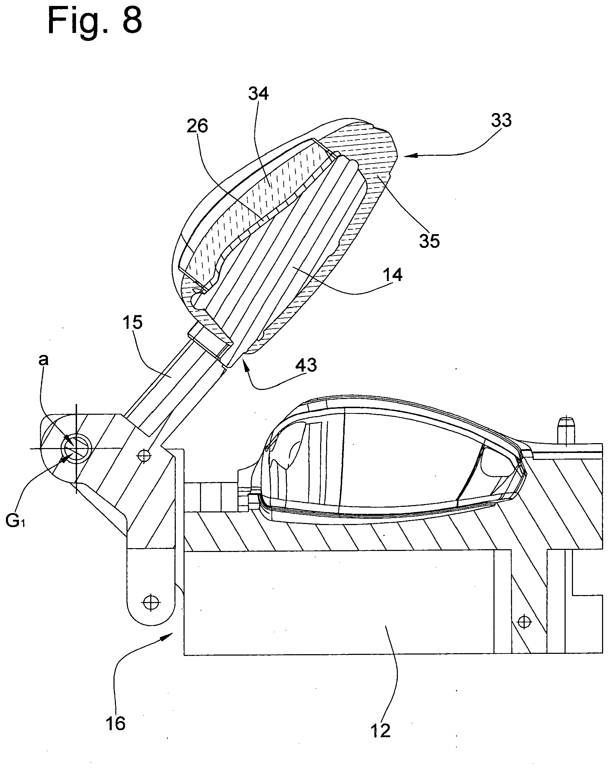

Nach dem Aushärten wird die Form wieder in die geöffnete Position bewegt, wobei das Formteil 30 und das Formteil 13 von dem Formteil 12 entfernt werden (siehe Fig. 7) und dann der Formkern 14 in Richtung u2 in die Entnahmeposition geschwenkt wird (siehe Fig. 8). Gemäß Fig. 8 befindet sich ein fertig ausgehärteter Schaumkörper 33 auf dem Formkern 14. Der Schaumkörper 33 kann dann von dem Formkern 14 entnommen werden. Schließlich wird die Form 11 gesäubert und steht dann wieder für einen weiteren Herstellungsprozess bereit.

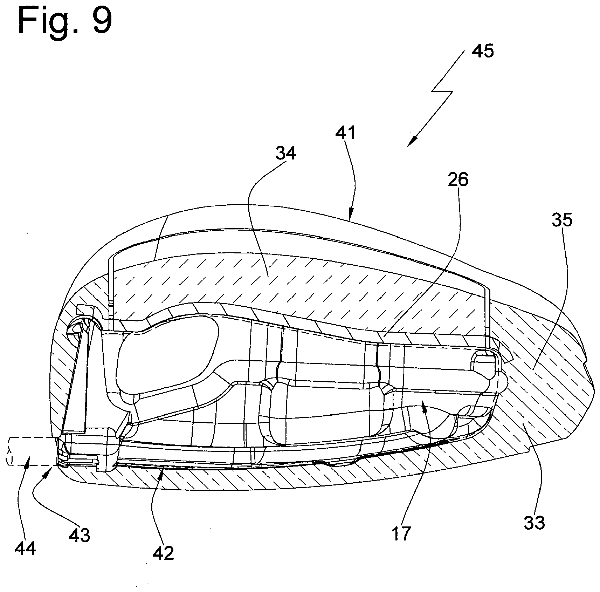

In Fig. 9 ist eine Kopfstütze 45 fertig montiert samt Schaumkörper 33 dargestellt. In einer Aussparung 17 des Schaumkörpers 33 ist ein Basisteil 42 der Kopfstütze 45 montiert, welches in Fig. 9 lediglich durch eine gestrichelte Linie angedeutet ist. Mittels einer gestrichelten Linie sind Tragstangen 44 angedeutet, welche durch eine Öffnung 43 des Schaumkörpers 33 aus diesem herausragen. Die Tragstangen sind an dem Basisteil 42 befestigt. Durch die Öffnung 43 kann der Kopfkasten 42 in der Aussparung 17 montiert werden.

Der Schaumkörper 33 umfasst einen Weichschaumbereich 34 sowie einen Hartschaumbereich 35. Der Weichschaumbereich 34 bildet nach der vollständigen Montage des Schaumkörpers 33 an dem Basisteil 42 zumindest teilweise einen Kopfanlagebereich 41 der Kopfstütze 45 aus. Der Hartschaumbereich 35 bildet einen hinteren Bereich, Seitenbereiche sowie einen oberen und einen unteren Bereich des Schaumkörpers der Kopfstütze. Der Weichschaumbereich 34 ist stoffschlüssig mit der Verbindungsmatte 26 verbunden und der Hartschaumbereich 35 ist ebenfalls stoffschlüssig mit der Verbindungsmatte 26 verbunden. Über die Verbindungsmatte 26 sind also der Weichschaumbereich 34 und der Hartschaumbereich 35 untereinander verbunden.

## Patentansprüche

1. Vorrichtung zur Herstellung eines Schaumstoffkörpers mit einer wenigstens zwei Formhälften (12, 13, 30) umfassenden Form (11), wobei ein erstes Formteil (12) und ein zweites Formteil (13) zwischen einer geöffneten und einer geschlossenen Position bewegbar sind, mit einer ersten Angussöffnung (27), die zu einer ersten Formhöhlung (20) führt sowie mit einer zweiten Angussöffnung (27), die zu einer separaten zweiten Formhöhlung (22) führt **dadurch gekennzeichnet, dass** die erste Formhöhlung (20) und die zweite Formhöhlung (22) in der geschlossenen Position mittels einer Wand voneinander separiert sind, wobei zwischen den Formhöhlungen wenigstens eine Öffnung ausgebildet ist und wenigstens ein Verbindungselement derart in der Öffnung positionierbar ist, dass es zum Verbinden der in den Formhöhlungen zu fertigenden Schaumteile in die erste Formhöhlung ragt und in die zweite Formhöhlung ragt.

2. Vorrichtung nach Anspruch 1, **dadurch gekennzeichnet, dass** ein Formkern (14) in der Form (11) anordenbar ist.

3. Vorrichtung nach Anspruch 2, **dadurch gekennzeichnet, dass** der Formkern (14) die erste Formhöhlung (20) von der zweiten Formhöhlung (22) voneinander trennt.

4. Vorrichtung nach einem der vorangehenden Ansprüche 2 oder 3, **dadurch gekennzeichnet, dass** der Formkern (14) bewegbar an der Form (11) gelagert ist.

5. Vorrichtung nach einem der vorangehenden Ansprüche 2 bis 4, **dadurch gekennzeichnet, dass** der Formkern (14) derart ausgebildet ist, dass das Verbindungselement (26) derart in der Form (11) angeordnet werden kann, dass es zum Verbinden des in der in den Formhöhlungen (29, 22) zu fertigenden Schaumteile in die erste Formhöhlung (20) ragt und in die zweite Formhöhlung (22) ragt.

6. Verfahren zur Herstellung eines Schaumstoffkörpers mit einer Form mit wenigstens einem ersten Formteil (12) und einem zweiten Formteil (13), wobei die Formteile (12, 13, 30) zwischen einer geöffneten Position und einer geschlossenen Position bewegbar sind, wobei eine erste Formhöhlung (20) und eine
zweite Formhöhlung (22) in der geschlossenen Position der From mittels einer Wand voneinander separiert sind,
wobei zwischen den Formhöhlungen wenigstens eine Öffnung ausgebildet ist und wenigstens ein Verbindungselement (26) derart in die Form eingelegt wird,
dass das Verbindungselement (26) zum Verbinden der in den Formhöhlungen zu fertigenden Schaumteile derart in der Öffnung angeordnet ist, dass es in eine erste Formhöhlung (20) und in eine zweite Formhöhlung (22) der Form (11) hineinragt, wobei das Verbindungselement derart ausgebildet ist, dass es mit dem ersten Schaumteil und dem zweiten Schaumteil stoffschlüssig und / oder formschlüssig verbindbar ist,
dass die Form (11) geschlossen wird,
dass gleichzeitig oder kurz nacheinander durch eine erste Angussöffnung (27) ein erster Schaum in die erste Formhöhlung (20) und durch eine zweite Angussöffnung (24) ein zweiter Schaum in die zweite Formhöhlung (22) gefüllt wird,
dass die Schäume in der ersten Formhöhlung (20) und in der zweiten Formhöhlung (22) einer Aushärtezeit unterzogen werden,
dass die Form (11) geöffnet wird, und
dass das Formteil aus der Form (11) entnommen wird.

7. Verfahren nach Anspruch 6, **dadurch gekennzeichnet, dass** ein Formkern (14) derart in der Form (11) angeordnet wird, dass er die erste Formhöhlung (20) von der zweiten Formhöhlung (22) trennt.

## Claims

1. Device for producing a foam body having a mould (11) comprising at least two mould halves (12, 13, 30), wherein a first mould part (12) and a second mould part (13) can be moved between an opened and a closed position, having a first casting opening (27), which leads to a first mould cavity (20), and having a second casting opening (27), which leads to a separate second mould cavity (22), **characterised in that** the first mould cavity (20) and the second mould cavity (22) are separated from each other in the closed position by means of a wall, wherein at least one opening is formed between the mould cavities, and at least one connecting element can be positioned in the opening in such a way that it protrudes into the first mould cavity to connect the foam parts to be produced in the mould cavities, and protrudes into the second mould cavity.

2. Device according to claim 1, **characterised in that** a mould core (14) can be arranged in the mould (11).

3. Device according to claim 2, **characterised in that** the mould core (14) separates the first mould cavity (20) from the second mould cavity (22).

4. Device according to one of preceding claims 2 or 3, **characterised in that** the mould core (14) is moveably mounted on the mould (11).

5. Device according to one of preceding claims 2 to 4, **characterised in that** the mould core (14) is formed in such a way that the connecting element (26) can be arranged in the mould (11) in such a way that it protrudes into the first mould cavity (20) for connecting the foam parts to be produced in the mould cavities (29, 22), and into the second mould cavity (22).

6. Method for producing a foam body having a mould having at least one first mould part (12) and a second mould part (13), wherein the mould parts (12, 13, 30) can be moved between an opened position and a closed position, wherein a first mould cavity (20) and a second mould cavity (22) are separated from each other in the closed position of the mould by means a wall,
wherein at least one opening is formed between the mould cavities, and at least one connecting element (26) is inserted into the mould in such a way that
the connecting element (26) is arranged in the opening for connecting the foam parts to be produced in the mould cavities in such a way that it protrudes into a first mould cavity (20) and into a second mould cavity (22) of the mould (11), wherein the connecting element is formed in such a way that it can be connected to the first foam part and the second foam part in a firmly bonded and/or interlocking manner,
the mould (11) is closed,
simultaneously or in quick succession, a first foam is filled into the first mould cavity (20) through a first casting opening (27) and a second foam is filled into the second mould cavity (22) through a second casting opening (24),
the foams in the first mould cavity (20) and in the second mould cavity (22) are subjected to a curing period,
the mould (11) is opened, and
the mould part is removed from the mould (11).

7. Method according to claim 6, **characterised in that** a mould core (14) is arranged in the mould (11) in such a way that it separates the first mould cavity (20) from the second mould cavity (22).

## Revendications

1. Dispositif pour la fabrication d'un corps en mousse avec un moule (11) comprenant au moins deux demi-moules (12, 13, 30), dans lequel une première partie de moule (12) et une deuxième partie de moule (13) peuvent être déplacés entre une position ouverte et une position fermée, avec une première ouverture de coulée (27) qui conduit à une première cavité de moule (20) ainsi qu'avec une deuxième ouverture de coulée (27) qui conduit à une deuxième cavité de moule (22) séparée, **caractérisé en ce que** la première cavité de moule (20) et la deuxième cavité de moule (22) sont séparées l'une de l'autre elles par une paroi en position fermée, au moins une ouverture étant formée entre les cavités de moule et au moins un élément de liaison pouvant être positionné dans l'ouverture de telle sorte qu'il dépasse dans la première cavité de moule et dépasse dans la deuxième cavité de moule pour relier les pièces en mousse à fabriquer dans les cavités de moule.

2. Dispositif selon la revendication 1, **caractérisé en ce qu'**un noyau de moule (14) peut être disposé dans le moule (11).

3. Dispositif selon la revendication 2, **caractérisé en ce que** le noyau de moule (14) sépare la première cavité de moule (20) de la deuxième cavité de moule (22).

4. Dispositif selon une des revendications précédentes 2 ou 3, **caractérisé en ce que** le noyau de moule (14) est monté de façon mobile sur le moule (11).

5. Dispositif selon la revendication une des revendications précédentes 2 à 4, **caractérisé en ce que** le noyau de moule (14) est configuré de telle sorte que l'élément de liaison (26) peut être disposé dans le moule (11) de telle sorte qu'il dépasse dans la première cavité de moule (20) et dépasse dans la deuxième cavité de moule (22) pour relier les pièces en mousse à fabriquer dans les cavités de moule (22).

6. Procédé pour la fabrication d'un corps en mousse avec un moule avec au moins une première partie de moule (12) et une deuxième partie de moule (13), selon lequel les parties de moule (12, 13, 30) peuvent être déplacées entre une position ouverte et une position fermée, selon lequel une première cavité de moule (20) et une deuxième cavité de moule (22) sont séparées l'une de l'autre elles par une paroi en position fermée,
selon lequel au moins une ouverture est formée entre les cavités de moule et au moins un élément de liaison (26) est inséré dans le moule (11) de telle sorte
que l'élément de liaison (26) pour relier les pièces en mousse à fabriquer dans les cavités de moule est disposé dans l'ouverture de telle sorte qu'il pénètre dans une première cavité de moule (20) et dans une deuxième cavité de moule (22), l'élément de liaison étant configuré de telle sorte qu'il peut être relié avec la première pièce en mousse et la deuxième pièce en mousse par adhérence et/ou par ajustement de forme,
que le moule (11) est fermé,
que, simultanément ou à bref intervalle, une première mousse est injectée par une première ouverture de coulée (27) dans la première cavité de moule (20) et une deuxième mousse par une deuxième ouverture de coulée (24) dans la deuxième cavité de moule (22),
que les mousses sont soumises dans la première cavité de moule (20) et dans la deuxième cavité de moule (22) à un temps de durcissement,
que le moule (11) est ouvert et
que la pièce moulée est sortie du moule (11).

7. Procédé selon la revendication 6, **caractérisé en ce qu'**un noyau de moule (14) est disposé dans le moule (11) de telle sorte qu'il sépare la première cavité de moule (20) de la deuxième cavité de moule (22).
